# EUROPEAN PATENT SPECIFICATION

(11) **EP 2 574 002 B1**
(45) Date of publication and mention of the grant of the patent: **21.02.2018**
(21) Application number: 12198276.3
(22) Date of filing: 31.07.2008
(51) Int. Cl.: H04L 29/06

(54) **SYSTEMS AND METHODS FOR SELECTING A CERTIFICATE FOR USE WITH SECURE MESSAGES**
SYSTEME UND VERFAHREN ZUR AUSWAHL EINES ZERTIFIKATS ZUR VERWENDUNG MIT SICHEREN NACHRICHTEN
SYSTÈMES ET PROCÉDÉS DE SÉLECTION D'UN CERTIFICAT À UTILISER AVEC DES MESSAGES SÉCURISÉS

(43) Date of publication of application: 27.03.2013
(62) Divisional of application: 08161596.5
(73) Proprietor: BlackBerry Limited, Waterloo, ON N2K 0A7 (CA)
(72) Inventor: Brown, Michael Stephen, Waterloo ON N2L 3W8 (CA); Little, Herbert Anthony, Waterloo ON N2T 2V8 (CA); Adams, Neil Patrick, Waterloo ON N2L 3W8 (CA)
(74) Representative: Hanna Moore + Curley

(56) References cited:
- WO-A2-03/001326
- US-A1- 2006 212 707
- US-A1- 2008 134 313

## Description

Embodiments described herein relate generally to the processing of messages, such as e-mail messages, and more specifically to a system and method for facilitating the selection of certificates used in the processing of encoded messages. For greater clarity, as used herein "encoding" and/or "encrypting" (and variations thereof) are intended to mean "securing" or otherwise to be construed broadly in the context of applying a security standard to a message.

Data in electronic mail ("e-mail") messages may be secured using one of a number of known protocols. Some of these protocols, such as Secure Multipurpose Internet Mail Extensions ("S/MIME") for example, rely on public and private encryption keys to provide confidentiality and integrity, and on a Public Key Infrastructure (PKI) to communicate information that provides authentication and authorization. Data encoded using a private key of a private key/public key pair can only be decoded using the corresponding public key of the pair, and data encoded using a public key of a private key/public key pair can only be decoded using the corresponding private key of the pair. The authenticity of public keys used in the encoding of messages is validated using digital certificates ("certificates"). A certificate will typically comprise the public key of the certificate holder, as well as other identification-related information.

Certificates are digital documents that are typically issued by certification authorities. In order to trust a particular public key, the public key typically needs to be contained in a certificate issued by a certification authority that is also trusted. The relationship between a trusted certification authority and a public key can be represented by a series of related certificates, also referred to as a certificate chain. The certificate chain can be identified and followed to determine the validity of a certificate.

If a particular individual wishes to send an encrypted message to a user of a computing device, the user's public key is required, and accordingly the individual will generally require a certificate that has been issued to the user. On the other hand, if the user of a computing device wishes to send a particular individual a signed message, the user will need to employ his private key. After the individual receives the signed message from the user, the user's certificate containing the corresponding public key would be required to verify the digital signature of the signed message and to validate the authenticity of that public key. From the user's perspective, a certificate issued to him or her, and which typically contains his or her public key, may be referred to as that user's "personal certificate"

US 2008/0134313 discloses a messaging application wherein a user can select a certificate via a GUI in a faster and more efficient manner. The certificate displayed by the messaging application can be configured by an user as the default one according to certain conditions.

Consider a situation where a user composes a message to be sent to a recipient identified by the user, where at least some of the data of the message is to be signed. The user may need to select an appropriate certificate (possibly from a group of available certificates) to be used in encoding some or all of the message.

### Brief Description of the Drawings

For a better understanding of embodiments described herein, and to show more clearly how they may be carried into effect, reference will now be made, by way of example, to the accompanying drawings in which:
FIG. 1 is a block diagram of a mobile device in one example implementation;
FIG. 2 is a block diagram of a communication subsystem component of the mobile device of FIG. 1;
FIG. 3 is a block diagram of a node of a wireless network;
FIG. 4 is a block diagram illustrating components of a host system in one example configuration;
FIG. 5 is a schematic diagram illustrating exemplary certificate store data;
FIG. 6 is a block diagram illustrating components of an example of an encoded message;
FIG. 7 is a flowchart illustrating steps in a method of processing messages for transmission from computing device in accordance with at least one embodiment; and
FIG. 8 is a screenshot illustrating a screen of a graphical user interface displayed on the display of a computing device in accordance with one example implementation.

### Description of Preferred Embodiments

Embodiments described herein are generally directed to a system and method that facilitates the selection of a certificate that may be used in the communication of an encoded message. In particular, the certificates available to be used in encoding or encrypting or otherwise securing a message may be ranked in accordance with predetermined criteria and one or more ranked certificates may be presented to the user for ease of selection and use.

In a broad aspect, there may be provided a method of processing messages for transmission from a computing device, the method comprising:
determining, by a messaging application, a set of certificates;
ranking, by the messaging application, each certificate in the set based on one or more predetermined criteria;
displaying, by the messaging application on a display of the computing device a plurality of ranked certificates in a ranked order, wherein at least one certificate comprises a highest ranked certificate; and
selecting, by the messaging application a displayed certificate in response to a user input received at an input device of the computing device for use with the message to be transmitted;
securing, by the messaging application a message using the selected certificate; and transmitting the secured message.

The ranking may be performed based on one or more predetermined ranking criteria. The ranking process may involve determining a sending email address, and wherein the one or more predetermined ranking criteria is based on an email address associated with each certificate. In addition or alternatively, the one or more predetermined ranking criteria is based on an issue date of each certificate in the set. The one or more predetermined ranking criteria is based on an expiry date of each certificate in the set. Further, the one or more predetermined ranking criteria may comprise whether each certificate is trusted. The one or more predetermined ranking criteria may be based on a strength of a public key algorithm and public key length associated with each certificate in the set. The one or more predetermined ranking criteria may be based on an allowed usage associated with each certificate.

In one aspect, the ranking may be based on a plurality of predetermined ranking criteria selected from the group consisting of:
an email address associated with each certificate;
an issue date for each certificate;
an expiry date for each certificate;
a public key algorithm and public key length associated with each certificate;
determining, for each certificate in the set, if the certificate is trusted; and an allowed usage for each certificate.

The method may further comprise storing default certificate data corresponding to the selected certificate. Other aspects may be directed to computer-readable medium comprising instructions executable on a processor of the computing device for implementing the method or methods.

In another broad aspect, there may be provided a computing device on which an application executes, wherein the application is programmed to perform the method or methods as described above.

In at least one embodiment, the computing device is a mobile device.

These and other aspects and features of various embodiments will be described in greater detail below.

Some embodiments described herein make use of a mobile station. A mobile station generally comprises a two-way communication device with advanced data communication capabilities having the capability to communicate with other computer systems, and is also referred to herein generally as a mobile device. A mobile device may also include the capability for voice communications. Depending on the functionality provided by a mobile device, it may be referred to as a data messaging device, a two-way pager, a cellular telephone with data messaging capabilities, a wireless Internet appliance, or a data communication device (with or without telephony capabilities). A mobile device communicates with other devices through a network of transceiver stations.

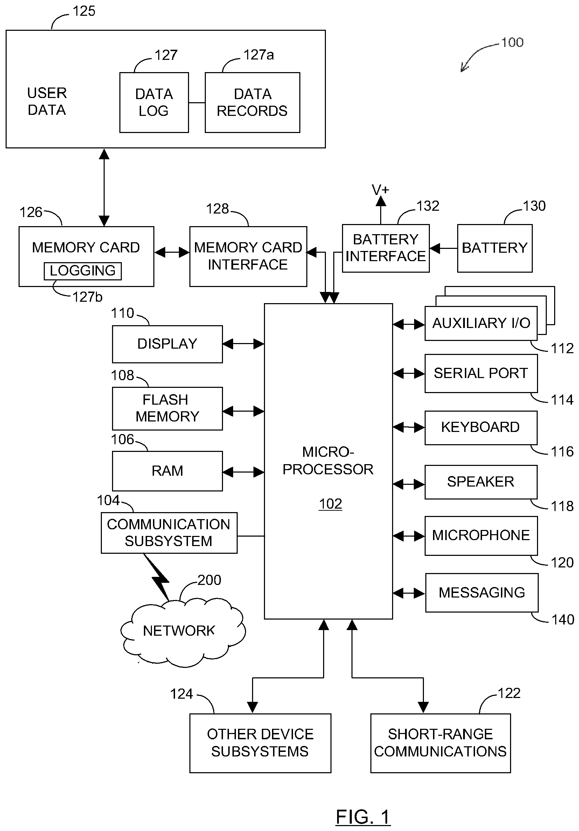

To aid the reader in understanding the structure of a mobile device and how it communicates with other devices, reference is made to FIGS. 1 through 3.

Referring first to FIG. 1, a block diagram of a mobile device in one example implementation is shown generally as 100. Mobile device 100 comprises a number of components, the controlling component being microprocessor 102. Microprocessor 102 controls the overall operation of mobile device 100. Communication functions, including data and voice communications, are performed through communication subsystem 104. Communication module or subsystem 104 receives messages from and sends messages to a wireless network 200. In this example implementation of mobile device 100, communication subsystem 104 is configured in accordance with the Global System for Mobile Communication (GSM) and General Packet Radio Services (GPRS) standards. The GSM/GPRS wireless network is used worldwide and it is expected that these standards may be supplemented or eventually superseded by newer standards such as Enhanced Data GSM Environment (EDGE), and Universal Mobile Telecommunications Service (UMTS), High-Speed Packet Access (HSPA), and Ultra Mobile Broadband (UMB), etc. New standards are still being defined, but it is believed that they will have similarities to the network behaviour described herein, and it will also be understood by persons skilled in the art that the invention is intended to use any other suitable standards that are developed in the future. The wireless link connecting communication subsystem 104 with network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network associated with mobile device 100 is a GSM/GPRS wireless network in one example implementation of mobile device 100, other wireless networks may also be associated with mobile device 100 in variant implementations. Different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) networks, CDMA2000 networks, Evolution Data Only (EV-DO) networks, GSM/GPRS networks (as mentioned above), and third-generation (3G) and beyond networks like EDGE, UMTS, and HSPA, etc. Some older examples of data-centric networks include the Mobitex™ Radio Network and the DataTAC™ Radio Network. Examples of older voice-centric data networks include Personal Communication Systems (PCS) networks like GSM and Time Division Multiple Access (TDMA) systems.

Microprocessor 102 also interacts with additional subsystems such as a Random Access Memory (RAM) 106, and flash memory 108. The microprocessor 102 may also be coupled to a display 110, auxiliary input/output (I/O) subsystem 112, serial port 114, keyboard 116, speaker 118, and microphone 120 may also be provided. Similarly, short-range communications subsystem 122 and other subsystems 124 may further be provided.

Some of the subsystems of mobile device 100 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list. Operating system software used by microprocessor 102 is typically stored in a persistent store such as flash memory 108, which may alternatively be a read-only memory (ROM) or similar storage element (not shown). Those skilled in the art will appreciate that the operating system, specific device applications, or parts thereof, may be temporarily loaded into a volatile store such as RAM 106.

Mobile device 100 may send and receive communication signals over network 200 after required network registration or activation procedures have been completed. Network access is associated with a subscriber or user of a mobile device 100. To identify a subscriber, mobile device 100 may provide for a memory card 126 such as a SIM (Subscriber Identity Module) card to be inserted in a memory card interface 128 in order to communicate with a network. A SIM card is one type of a conventional "smart card" used to identify a subscriber of mobile device 100 and to personalize the mobile device 100, among other things. Without such a memory card 126, mobile device 100 may not be fully operational for communication with network 200. Alternatively, by way of example only, other types of "smart cards" which might be used may include an R-UIM (removable user identity module) or a CSIM (CDMA (code division multiple access) subscriber identity module) or a USIM (universal subscriber identity module) card. By inserting memory card 126 into memory card interface 128, a subscriber can access all subscribed services. Services may include without limitation: web browsing and messaging such as e-mail, voice mail, Short Message Service (SMS), Multimedia Messaging Services (MMS), and peer-to-peer messages such as PIN-to-PIN messages which may also be referred to simply as PIN messages. As used in this context, a PIN (product identification number) generally refers to a number that uniquely identifies the mobile device 100, and a PIN message generally refers to a message addressed to one or more PIN numbers. More advanced services may include without limitation: point of sale, field service and sales force automation. Memory card 126 includes a processor and memory for storing information. Once memory card 126 is inserted in memory card interface 128, it is coupled to microprocessor 102. In order to identify the subscriber, memory card 126 contains some user parameters such as an International Mobile Subscriber Identity (IMSI). An advantage of using memory card 126 is that a subscriber is not necessarily bound by any single physical mobile device.

Memory card 126 may store additional subscriber information and user data 125 for a mobile device as well, including datebook (or calendar) information and a data log 127 of data records 127a corresponding to recent message and call information. The memory card 126 includes logging module 127b operatively coupled to the communication module and programmed to store such data records 127a in the data log 127. The user data 125 and data log 127 may reside in whole or in part on the memory card 126 or in other appropriate storage typically resident on the device 100.

Mobile device 100 may be a battery-powered device and may include a battery interface 132 for receiving one or more rechargeable batteries 130. Battery interface 132 may be coupled to a regulator (not shown), which assists battery 130 in providing power V+ to mobile device 100. Although current technology makes use of a battery, future technologies such as micro fuel cells may provide the power to mobile device 100. In some embodiments, mobile device may be solar-powered.

Microprocessor 102, in addition to its operating system functions, enables execution of software applications on mobile device 100. A set of applications that control basic device operations, including data and voice communication applications, may be installed on mobile device 100 during its manufacture. Another application that may be loaded onto mobile device 100 is a personal information manager (PIM). A PIM has functionality to organize and manage data items of interest to a subscriber, such as, but not limited to, e-mail, calendar events, voice mails, appointments, and task items. A PIM application has the ability to send and receive data items via wireless network 200. PIM data items may be seamlessly integrated, synchronized, and updated via wireless network 200 with the mobile device subscriber's corresponding data items stored and/or associated with a host computer system. This functionality creates a mirrored host computer on mobile device 100 with respect to such items. This can be particularly advantageous where the host computer system is the mobile device subscriber's office computer system.

Additional applications may also be loaded onto mobile device 100 through network 200, auxiliary I/O subsystem 112, serial port 114, short-range communications subsystem 122, or any other suitable subsystem 124. This flexibility in application installation increases the functionality of mobile device 100 and may provide enhanced on-device functions, communication-related functions, or both. For example, secure communication applications may enable electronic commerce functions and other such financial transactions to be performed using mobile device 100.

Serial port 114 enables a subscriber to set preferences through an external device or software application and extends the capabilities of mobile device 100 by providing for information or software downloads to mobile device 100 other than through a wireless communication network. The alternate download path may, for example, be used to load an encryption key onto mobile device 100 through a direct and thus reliable and trusted connection to provide secure device communication.

Short-range communications subsystem 122 provides for communication between mobile device 100 and different systems or devices, without the use of network 200. For example, subsystem 122 may include an infrared device and associated circuits and components for short-range communication. Examples of short range communication would include standards developed by the Infrared Data Association (IrDA), Bluetooth, and the 802.11 family of standards developed by IEEE.

In use, a received signal such as a text message, an e-mail message, or web page download will be processed by communication subsystem 104 and input to microprocessor 102. Microprocessor 102 will then process the received signal for output to display 110 or alternatively to auxiliary I/O subsystem 112. A subscriber may also compose data items, such as e-mail messages, for example, using keyboard 116 in conjunction with display 110 and possibly auxiliary I/O subsystem 112. Auxiliary subsystem 112 may include devices such as: a touch screen, mouse, track ball, infrared fingerprint detector, or a roller wheel with dynamic button pressing capability. Keyboard 116 may comprise an alphanumeric keyboard and/or telephone-type keypad. Keyboard 116 may comprise a virtual keyboard or a physical keyboard or both. A composed item may be transmitted over network 200 through communication subsystem 104.

For voice communications, the overall operation of mobile device 100 is substantially similar, except that the received signals may be processed and output to speaker 118, and signals for transmission may be generated by microphone 120. Alternative voice or audio I/O subsystems, such as a voice message recording subsystem, may also be implemented on mobile device 100. Although voice or audio signal output is accomplished primarily through speaker 118, display 110 may also be used to provide additional information such as the identity of a calling party, duration of a voice call, or other voice call related information.

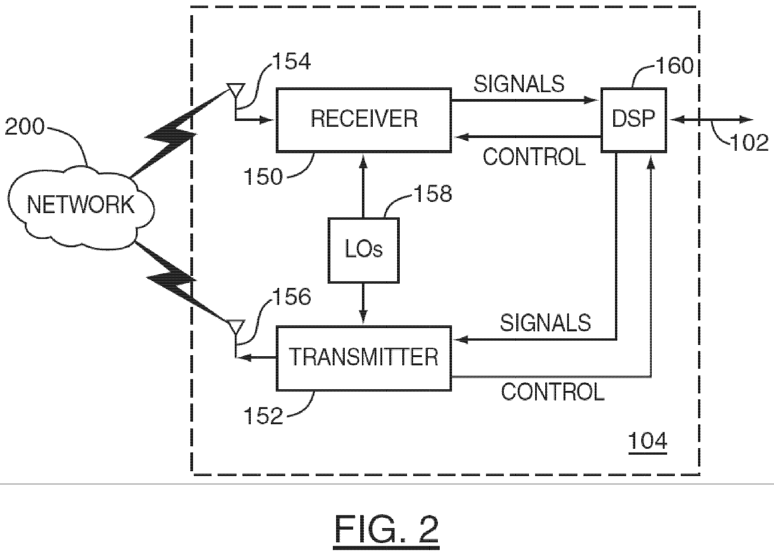

Referring now to FIG. 2, a block diagram of the communication subsystem component 104 of FIG. 1 is shown. Communication subsystem 104 comprises a receiver 150, and a transmitter 152. The subsystem 104 may also be coupled to one or more embedded or internal antenna elements 154, 156, and a Local Oscillators (LOs) 158. A processing module such as a Digital Signal Processor (DSP) 160, may also be provided.

The particular design of communication subsystem 104 is dependent upon the network 200 in which mobile device 100 is intended to operate, thus it should be understood that the design illustrated in FIG. 2 serves only as one example. Signals received by antenna 154 through network 200 are input to receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in DSP 160. In a similar manner, signals to be transmitted are processed, including modulation and encoding, by DSP 160. These DSP-processed signals are input to transmitter 152 for digital-to-analog (D/A) conversion, frequency up conversion, filtering, amplification and transmission over network 200 via antenna 156. DSP 160 not only processes communication signals, but also provides for receiver and transmitter control. For example, the gains applied to communication signals in receiver 150 and transmitter 152 may be adaptively controlled through automatic gain control algorithms implemented in DSP 160.

The wireless link between mobile device 100 and a network 200 may contain one or more different channels, typically different RF channels, and associated protocols used between mobile device 100 and network 200. A RF channel is a limited resource that must be conserved, typically due to limits in overall bandwidth and limited battery power of mobile device 100.

When mobile device 100 is fully operational, transmitter 152 may be keyed or turned on only when it is sending to network 200 and may otherwise be turned off to conserve resources. Similarly, receiver 150 may be periodically turned off to conserve power until it is needed to receive signals or information (if at all) during designated time periods.

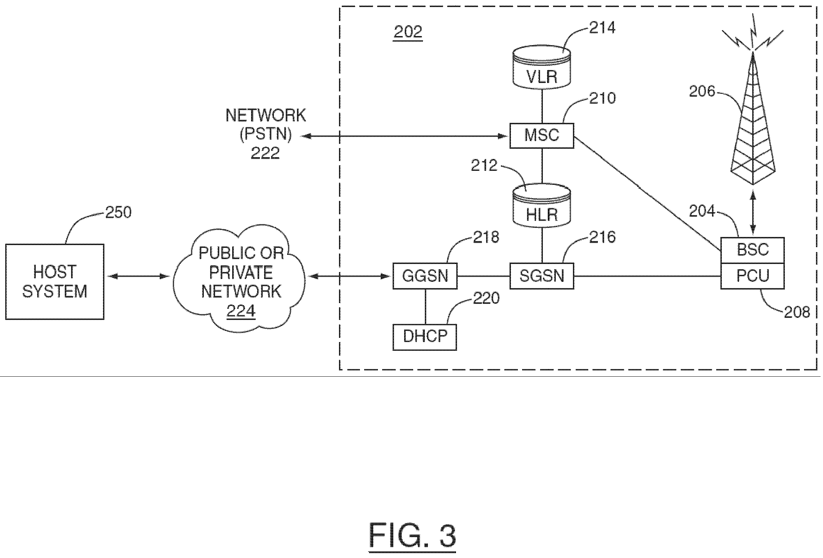

Referring now to FIG. 3, a block diagram of a node of an exemplary wireless network is shown as 202. In practice, network 200 comprises one or more nodes 202. Mobile device 100 communicates with a node 202 within wireless network 200. In the example implementation of FIG. 3, node 202 is configured in accordance with General Packet Radio Service (GPRS) and Global Systems for Mobile (GSM) technologies; however, in other embodiments, different standards may be implemented as discussed in more detail above. Node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather serves as a list of components that are commonly used in communications through network 200. for ease of illustration.

In a GSM network, MSC 210 is coupled to BSC 204 and to a landline network, such as a Public Switched Telephone Network (PSTN) 222 to satisfy circuit switched requirements. The connection through PCU 208, SGSN 216 and GGSN 218 to the public or private network (Internet) 224 (also referred to herein generally as a shared network infrastructure) represents the data path for GPRS capable mobile devices. In a GSM network extended with GPRS capabilities, BSC 204 also contains a Packet Control Unit (PCU) 208 that connects to SGSN 216 to control segmentation, radio channel allocation and to satisfy packet switched requirements. To track mobile device location and availability for both circuit switched and packet switched management, HLR 212 is shared between MSC 210 and SGSN 216. Access to VLR 214 is controlled by MSC 210.

Station 206 comprises a fixed transceiver station. Station 206 and BSC 204 together form the fixed transceiver equipment. The fixed transceiver equipment provides wireless network coverage for a particular coverage area commonly referred to as a "cell". The fixed transceiver equipment transmits communication signals to and receives communication signals from mobile devices within its cell via station 206. The fixed transceiver equipment normally performs such functions as modulation and possibly encoding and/or encryption of signals to be transmitted to the mobile device in accordance with particular, usually predetermined, communication protocols and parameters, under control of its controller. The fixed transceiver equipment similarly demodulates and possibly decodes and decrypts, if necessary, any communication signals received from mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in HLR 212. HLR 212 also contains location information for each registered mobile device and can be queried to determine the current location of a mobile device. MSC 210 is responsible for a group of location areas and stores the data of the mobile devices currently in its area of responsibility in VLR 214. Further VLR 214 also contains information on mobile devices that are visiting other networks. The information in VLR 214 includes part of the permanent mobile device data transmitted from HLR 212 to VLR 214 for faster access. By moving additional information from a remote HLR 212 node to VLR 214, the amount of traffic between these nodes can be reduced so that voice and data services can be provided with faster response times and at the same time requiring less use of computing resources.

SGSN 216 and GGSN 218 are elements added for GPRS support namely, packet switched data support, within GSM. SGSN 216 and MSC 210 have similar responsibilities within wireless network 200 by keeping track of the location of each mobile device 100. SGSN 216 also performs security functions and access control for data traffic on network 200. GGSN 218 provides internetworking connections with external packet switched networks and connects to one or more SGSN's 216 via an Internet Protocol (IP) backbone network operated within the network 200. During normal operations, a given mobile device 100 performs a "GPRS Attach" to acquire an IP address and to access data services. This normally is not present in circuit switched voice channels as Integrated Services Digital Network (ISDN) addresses are used for routing incoming and outgoing calls. Currently, all GPRS capable networks use private, dynamically assigned IP addresses, thus requiring a DHCP server 220 connected to the GGSN 218. There are many mechanisms for dynamic IP assignment, including using a combination of a Remote Authentication Dial-In User Service (RADIUS) server and DHCP server. Once the GPRS Attach is complete, a logical connection is established from a mobile device 100, through PCU 208, and SGSN 216 to an Access Point Node (APN) within GGSN 218. The APN represents a logical end of an IP tunnel that can either access direct Internet compatible services or private network connections. The APN also represents a security mechanism for network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, network 200 will run an idle timer for each PDP Context to determine if there is a lack of activity. When a mobile device 100 is not using its PDP Context, the PDP Context can be deallocated and the IP address returned to the IP address pool managed by DHCP server 220.

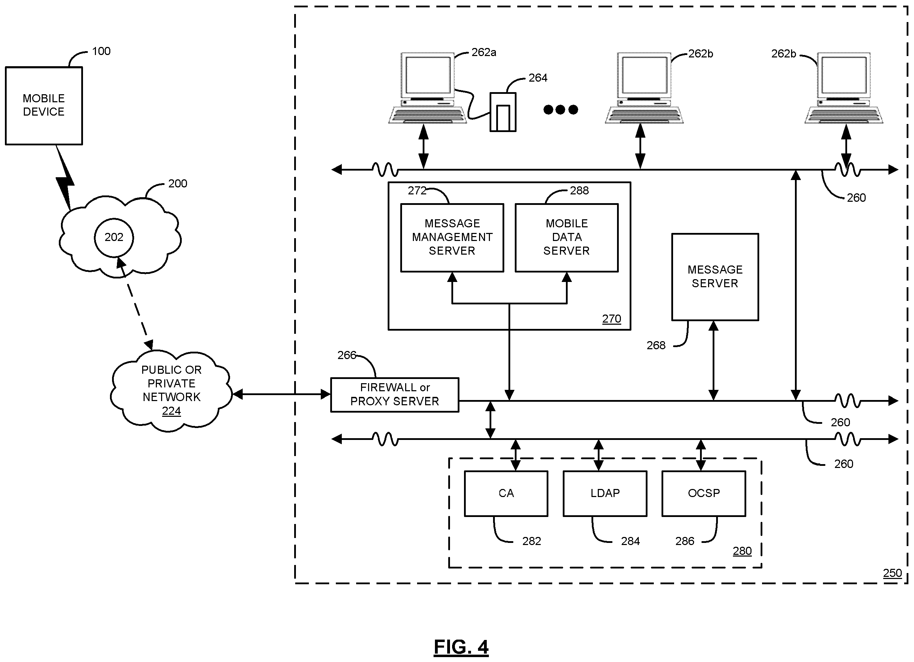

Referring now to FIG. 4, a block diagram illustrating components of a host system in one example configuration is shown. Host system 250 may typically be a corporate office or other local area network (LAN), or may instead be a home office computer or some other private system, for example, in variant implementations. As other examples, the host system 250 may comprise a LAN controlled by a governmental, healthcare, financial, or educational institution. In this example shown in FIG. 4, host system 250 is depicted as a LAN of an organization to which a user of mobile device 100 belongs.

LAN 250 comprises a number of network components connected to each other by LAN connections 260. For instance, a user's desktop computer 262a, which may be connected to an accompanying cradle 264 for the user's mobile device 100, is situated on LAN 250. Cradle 264 for mobile device 100 may be coupled to computer 262a by a serial or a Universal Serial Bus (USB) connection, for example. Other user computers 262b are also situated on LAN 250, and each may or may not be equipped with an accompanying cradle 264 for a mobile device. Cradle 264 facilitates the loading of information (e.g. PIM data, private symmetric encryption keys to facilitate secure communications between mobile device 100 and LAN 250) from user computer 262a to mobile device 100, and may be particularly useful for bulk information updates often performed in initializing mobile device 100 for use. The information downloaded to mobile device 100 may include S/MIME certificates or PGP keys used in the exchange of messages. The process of downloading information from a user's desktop computer 262a to the user's mobile device 100 may also be referred to as synchronization.

It will be understood by persons skilled in the art that user computers 262a, 262b will typically be also connected to other peripheral devices not explicitly shown in FIG. 4. Furthermore, only a subset of network components of LAN 250 are shown in FIG. 4 for ease of exposition, and it will be understood by persons skilled in the art that LAN 250 will comprise additional components not explicitly shown in FIG. 4, for this example configuration. More generally, LAN 250 may represent a smaller part of a larger network [not shown] of the organization, and may comprise different components and/or be arranged in different topologies than that shown in the example of FIG. 4.

In this example, mobile device 100 communicates with LAN 250 through a node 202 of wireless network 200 and a shared network infrastructure 224 such as a service provider network or the public Internet. Access to LAN 250 may be provided through one or more routers [not shown], and computing devices of LAN 250 may operate from behind a firewall or proxy server 266.

In a variant implementation, LAN 250 comprises a wireless VPN router [not shown] to facilitate data exchange between the LAN 250 and mobile device 100. Using a wireless VPN router, a VPN connection can be established directly through a specific wireless network to mobile device 100. With Internet Protocol (IP) Version 6 (IPV6), an IP address may be assigned to every mobile device, making it possible to push information to a mobile device at any time. An advantage of using a wireless VPN router is that it could be an off-the-shelf VPN component, not requiring a separate wireless gateway and separate wireless infrastructure to be used. A VPN connection may include, for example, a Transmission Control Protocol (TCP)/IP or User Datagram Protocol (UDP)/IP connection to deliver the messages directly to mobile device 100 in this variant implementation.

Messages intended for a user of mobile device 100 are initially received by a message server 268 of LAN 250. Such messages may originate from any of a number of sources. For instance, a message may have been sent by a sender from a computer 262b within LAN 250, from a different mobile device [not shown] connected to wireless network 200 or to a different wireless network, or from a different computing device or other device capable of sending messages, via the shared network infrastructure 224, and possibly through an application service provider (ASP) or Internet service provider (ISP), for example.

Message server 268 typically acts as the primary interface for the exchange of messages, particularly e-mail messages, within the organization and over the shared network infrastructure 224. Each user in the organization that has been set up to send and receive messages is typically associated with a user account managed by message server 268. One example of a message server 268 is a Microsoft Exchange™ Server. In some implementations, LAN 250 may comprise multiple message servers 268. Message server 268 may also be adapted to provide additional functions beyond message management, including the management of data associated with calendars and task lists, for example.

When messages are received by message server 268, they are typically stored in a message store [not explicitly shown], from which messages can be subsequently retrieved and delivered to users. For instance, an e-mail client application operating on a user's computer 262a may request the e-mail messages associated with that user's account stored on message server 268. These messages may then typically be retrieved from message server 268 and stored locally on computer 262a.

When operating mobile device 100, the user may wish to have e-mail messages retrieved for delivery to the handheld. An e-mail client application operating on mobile device 100 may also request messages associated with the user's account from message server 268. The e-mail client may be configured (either by the user or by an administrator, possibly in accordance with an organization's information technology (IT) policy) to make this request at the direction of the user, at some pre-defined time interval, or upon the occurrence of some pre-defined event. In some implementations, mobile device 100 is assigned its own e-mail address, and messages addressed specifically to mobile device 100 are automatically redirected to mobile device 100 as they are received by message server 268.

To facilitate the wireless communication of messages and message-related data between mobile device 100 and components of LAN 250, a number of wireless communications support components 270 may be provided. In this example implementation, wireless communications support components 270 comprise a message management server 272, for example. Message management server 272 is used to specifically provide support for the management of messages, such as e-mail messages, that are to be handled by mobile devices. Generally, while messages are still stored on message server 268, message management server 272 can be used to control when, if, and how messages should be sent to mobile device 100. Message management server 272 also facilitates the handling of messages composed on mobile device 100, which are sent to message server 268 for subsequent delivery.

For example, message management server 272 may: monitor the user's "mailbox" (e.g. the message store associated with the user's account on message server 268) for new e-mail messages; apply user-definable filters to new messages to determine if and how the messages will be relayed to the user's mobile device 100; compress and encrypt new messages (e.g. using an encryption technique such as Data Encryption Standard (DES) or Triple DES) and push them to mobile device 100 via the shared network infrastructure 224 and wireless network 200; and receive messages composed on mobile device 100 (e.g. encrypted using Triple DES), decrypt and decompress the composed messages, re-format the composed messages if desired so that they will appear to have originated from the user's computer 262a, and re-route the composed messages to message server 268 for delivery.

Certain properties or restrictions associated with messages that are to be sent from and/or received by mobile device 100 can be defined (e.g. by an administrator in accordance with IT policy) and enforced by message management server 272. These may include whether mobile device 100 may receive encrypted and/or signed messages, minimum encryption key sizes, whether outgoing messages must be encrypted and/or signed, and whether copies of all secure messages sent from mobile device 100 are to be sent to a pre-defined copy address, for example.

Message management server 272 may also be adapted to provide other control functions, such as only pushing certain message information or pre-defined portions (e.g. "blocks") of a message stored on message server 268 to mobile device 100. For example, when a message is initially retrieved by mobile device 100 from message server 268, message management server 272 is adapted to push only the first part of a message to mobile device 100, with the part being of a pre-defined size (e.g. 2 KB). The user can then request more of the message, to be delivered in similar-sized blocks by message management server 272 to mobile device 100, possibly up to a maximum pre-defined message size.

Accordingly, message management server 272 facilitates better control over the type of data and the amount of data that is communicated to mobile device 100, and can help to minimize potential waste of bandwidth or other resources.

It will be understood by persons skilled in the art that message management server 272 need not be implemented on a separate physical server in LAN 250 or other network. For example, some or all of the functions associated with message management server 272 may be integrated with message server 268, or some other server in LAN 250. Furthermore, LAN 250 may comprise multiple message management servers 272, particularly in variant implementations where a large number of mobile devices needs to be supported.

Embodiments described herein relate generally to certificates used in the processing of encoded messages, such as e-mail messages that are encrypted and/or signed. While Simple Mail Transfer Protocol (SMTP), RFC822 headers, and Multipurpose Internet Mail Extensions (MIME) body parts may be used to define the format of a typical e-mail message not requiring encoding, Secure/MIME (S/MIME), a version of the MIME protocol, may be used in the communication of encoded messages (i.e. in secure messaging applications). S/MIME enables end-to-end authentication and confidentiality, and protects data integrity and privacy from the time an originator of a message sends a message until it is decoded and read by the message recipient. Other known standards and protocols may be employed to facilitate secure message communication, such as Pretty Good Privacy™ (PGP), OpenPGP, and others known in the art.

Secure messaging protocols such as S/MIME rely on public and private encryption keys to provide confidentiality and integrity, and on a Public Key Infrastructure (PKI) to communicate information that provides authentication and authorization. Data encoded using a private key of a private key/public key pair can only be decoded using the corresponding public key of the pair, and data encoded using a public key of a private key/public key pair can only be decoded using the corresponding private key of the pair. It is intended that private key information never be made public, whereas public key information may be shared.

For example, if a sender wishes to send a message to a recipient in encrypted form, the recipient's public key is used to encrypt a message, which can then be decrypted only using the recipient's private key. Alternatively, in some encoding techniques, a one-time session key is generated and used to encrypt the body of a message, typically with a symmetric encryption technique (e.g. Triple DES). The session key is then encrypted using the recipient's public key (e.g. with a public key encryption algorithm such as RSA), which can then be decrypted only using the recipient's private key. The decrypted session key can then be used to decrypt the message body. The message header may be used to specify the particular encryption scheme that must be used to decrypt the message. Other encryption techniques based on public key cryptography may be used in variant implementations. However, in each of these cases, only the recipient's private key may be used to facilitate decryption of the message, and in this way, the confidentiality of messages can be maintained.

As a further example, a sender may sign a message using a digital signature. A digital signature generally comprises a digest of the message (e.g. a hash of the message) encoded using the sender's private key, which can then be appended to the outgoing message. To verify the digital signature of the message when received, the recipient uses the same technique as the sender (e.g. using the same standard hash algorithm) to obtain a digest of the received message. The recipient also uses the sender's public key to decode the digital signature, in order to obtain what should be a matching digest for the received message. If the digests of the received message do not match, this suggests that either the message content was changed during transport and/or the message did not originate from the sender whose public key was used for verification. Digital signature algorithms are designed in such a way that only someone with knowledge of the sender's private key should be able to encode a signature that the recipient will decode correctly using the sender's public key. Therefore, by verifying a digital signature in this way, authentication of the sender and message integrity can be maintained.

An encoded message may be encrypted, signed, or both encrypted and signed. The authenticity of public keys used in these operations is validated using certificates. A certificate is a digital document issued by a certificate authority (CA). Certificates are used to authenticate the association between users and their public keys, and essentially, provides a level of trust in the authenticity of the users' public keys. Certificates contain information about the certificate holder, with certificate contents typically formatted in accordance with an accepted standard (e.g. X.509).

As will be understood, a certificate chain may be created, connecting a certificate issued to an individual, which may be referred to as an end entity certificate (which typically identifies the certificate holder) and the issuer of the certificate. When the individual composes a message to be sent to a recipient, it is customary to include that individual's certificate with the message.

The certificate holder identified in a certificate is also referred to as the "subject" of that certificate. From the perspective of a given certificate holder, a certificate issued to him or her, and which typically contains his or her public key, may be referred to as a "personal certificate".

For a public key to be trusted, the public key typically needs to be contained in a certificate issued by a certification authority that is also trusted. The relationship between a trusted certificate authority ("CA") and a user's public key can be represented by a series of related certificates, also referred to as a certificate chain. The certificate chain can be identified and followed to determine the validity of a certificate.

Certificate servers store information about certificates and lists identifying certificates that have been revoked. These certificate servers can be accessed to obtain certificates and to verify certificate authenticity and revocation status. For example, a Lightweight Directory Access Protocol (LDAP) server may be used to obtain certificates, and an Online Certificate Status Protocol (OCSP) server may be used to verify certificate revocation status.

Standard e-mail security protocols typically facilitate secure message transmission between non-mobile computing devices (e.g. computers 262a, 262b of FIG. 4; remote desktop devices). Referring again to FIG. 4, in order that signed messages received from senders may be read from mobile device 100 and encrypted messages be sent to those senders, mobile device 100 is adapted to store certificates and associated public keys of other individuals. Certificates stored on a user's computer 262a will typically be downloaded from computer 262a to mobile device 100 through cradle 264, for example.

Certificates stored on computer 262a and downloaded to mobile device 100 are not limited to certificates associated with individuals but may also include certificates issued to CAs, for example. Certain certificates stored in computer 262a and/or mobile device 100 can also be explicitly designated as "trusted" by the user. Accordingly, when a certificate is received by a user on mobile device 100, mobile device 100 can verify whether the certificate is trusted by matching the certificate with one stored on mobile device 100 and designated as trusted, or by forming a certificate chain from the certificate to one stored on mobile device 100 and designated as trusted.

Mobile device 100 may also be adapted to store the private key of the public key/private key pair associated with the user, so that the user of mobile device 100 can sign outgoing messages composed on mobile device 100, and decrypt messages sent to the user encrypted with the user's public key. The private key may be downloaded to mobile device 100 from the user's computer 262a through cradle 264, for example. The private key may be exchanged between the computer 262a and mobile device 100 so that the user may share one identity and one method for accessing messages.

User computers 262a, 262b can obtain certificates from a number of sources, for storage on computers 262a, 262b and/or mobile devices (e.g. mobile device 100). These certificate sources may be private (e.g. dedicated for use within an organization) or public, may reside locally or remotely, and may be accessible from within an organization's private network or through the Internet, for example. In the example shown in FIG. 4, multiple PKI servers 280 associated with the organization reside on LAN 250. PKI servers 280 include a CA server 282 for issuing certificates, an LDAP server 284 used to search for and download certificates (e.g. for individuals within the organization), and an OCSP server 286 used to verify the revocation status of certificates.

Certificates may be retrieved from LDAP server 284 by a user computer 262a, for example, to be downloaded to mobile device 100 via cradle 264. However, in a variant implementation, LDAP server 284 may be accessed directly (i.e. "over the air" in this context) by mobile device 100, and mobile device 100 may search for and retrieve individual certificates through a mobile data server 288. Similarly, mobile data server 288 may be adapted to allow mobile device 100 to directly query OCSP server 286 to verify the revocation status of certificates.

Other sources of certificates [not shown] may include a Windows certificate store, another secure certificate store on or outside LAN 250, and smart cards, for example.

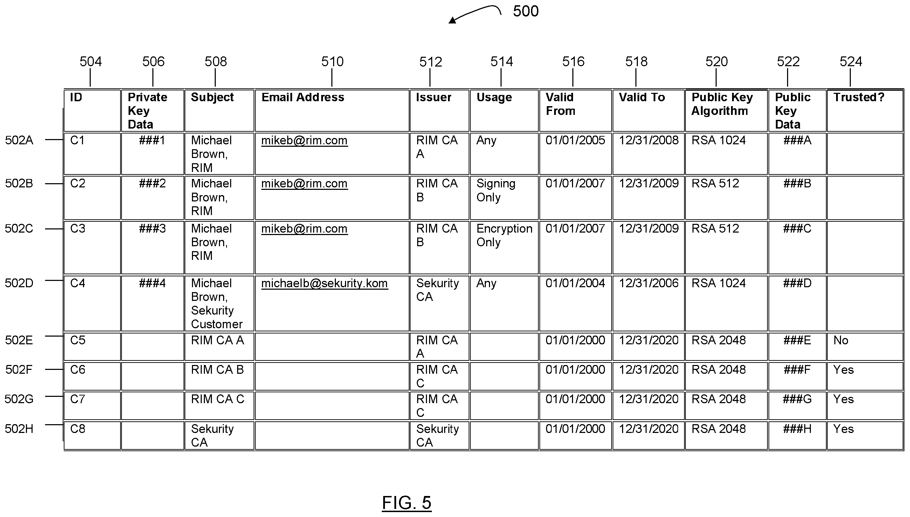

Referring now to FIG. 5, illustrated therein is example certificate store data 500, with each record stored therein corresponding to various certificates 502. Such certificates 502 may be available for use by the mobile device 100 and some or all of which may be stored in persistent memory 108, as will be discussed in greater detail below.

Each certificate 502 may be provided with a unique certificate identifier 504, and some may be stored along with corresponding private key data 506. The certificates 502 may also be provided with subject data 508 corresponding to the subject of the certificate 502, email address data 510, issuer data 512, usage data 514 corresponding to permitted uses of the certificate 502. The certificates 502 may also be provided with data corresponding to issue date 516 and expiry date 518, the certificate's 502 public key algorithm 520, public key data 522, and trusted status data 524 corresponding to whether or not the certificate 502 is known to be trusted.

As can be seen in the example data 500, each of certificates "C5" 502E, "C7" 502G and "C8" 502H has subject data 508 corresponding to its issuer data 512. Accordingly, each such certificate 502 is "self-signed", and may be referred to as a "root certificate".

In contrast, each of certificates "C1" 502A, "C2" 502B, and "C3" 502C are personal certificates of "Michael Brown, RIM", each having a link (via its issuer data 512) to another certificate 502. Certificates "C2" 502B and "C3" 502C both link to "C6" 502F, as their issuer data 512 corresponds to the subject data 508 of "C6" 502F ("RIM CA B"). Correspondingly, "C6" 502F links to "C7" 502G. In such certificate chains, certificate "C6" 502F may be referred to as an "intermediate certificate".

As will be understood, any given certificate chain to a root certificate, assuming a chain to the root certificate can be determined for a particular end entity certificate, may contain zero, one, or multiple intermediate certificates. If a certificate 502 is a root certificate issued by a trusted source (from a large certificate authority such as Verisign or Entrust, for example), then the certificate 502 may be considered to be trusted by definition. The implication is that both the sender and the recipient of the message trust the source of the root certificate. If a particular certificate 502 cannot be chained to a trusted certificate, that certificate may be considered to be "not trusted". As will be understood, intermediate and root certificates may already be stored in the certificate store on the recipient's computing device, or they may need to be retrieved from a certificate source (e.g. LDAP server 284 of FIG. 4 or some other public or private LDAP server). If a certificate is already stored in the recipient's computing device and the certificate chains to a stored, trusted certificate, then it may be designated as trusted by the recipient.

For example, we see from the trust data 524 in the illustrative data 500, that root certificates "C7" 502G and "C8" 502H are both trusted, while root certificate "C5" 502E is not. As noted above, certificates 502 that link to trusted root certificates "C7" 502G and "C8" 502H may therefore be determined and verified to be trusted while certificates 502 that link to untrusted root certificate "C5" 502E will therefore not be trusted.

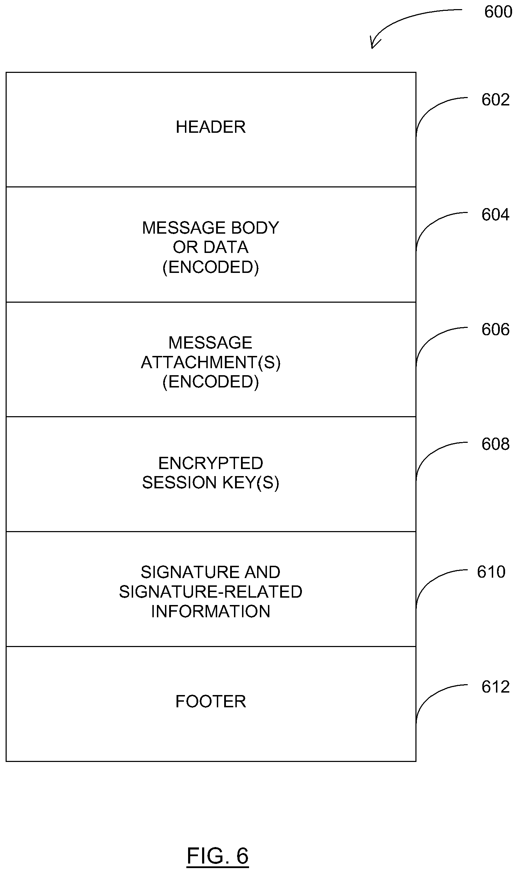

Referring now to FIG. 6, a block diagram illustrating components of an example of an encoded message, as may be received by a message server (e.g. message server 268 of FIG. 4), is shown generally as 600. Encoded message 600 typically includes one or more of the following: a header portion 602, an encoded body portion 604, optionally one or more encoded attachments 606, one or more encrypted session keys 608, signature and signature-related information 610, and a footer 612. For example, header portion 608 typically includes addressing information such as "To", "From", and "CC" addresses, and may also include message length indicators, and sender encryption and signature scheme identifiers, for example. Actual message content normally includes a message body or data portion 604 and possibly one or more attachments 606, which may be encrypted by the sender using a session key. If a session key was used, it is typically encrypted for each intended recipient using the respective public key for each recipient, and included in the message at 608. If the message was signed, a signature and signature-related information 610 are also included. This may include the sender's certificate, for example.

The format for an encoded message as shown in FIG. 6 is provided by way of example only, and persons skilled in the art will understand that encoded messages may exist in other formats. For example, depending on the specific messaging scheme used, components of an encoded message may appear in a different order than shown in FIG. 6 (e.g. encrypted session keys 608 may precede message body 604), and an encoded message may include fewer, additional, or different components, which may depend on whether the encoded message is encrypted, signed or both.

Consider a situation in which a user intends to send an S/MIME or otherwise secured email message to a recipient. If the user has one or more certificates 502 available, the process of selecting a certificate 502 for use, may be onerous or cumbersome, particularly if the user is not technically proficient. The process may also be cumbersome if the user has multiple email addresses/identities from which he or she will be sending the message.

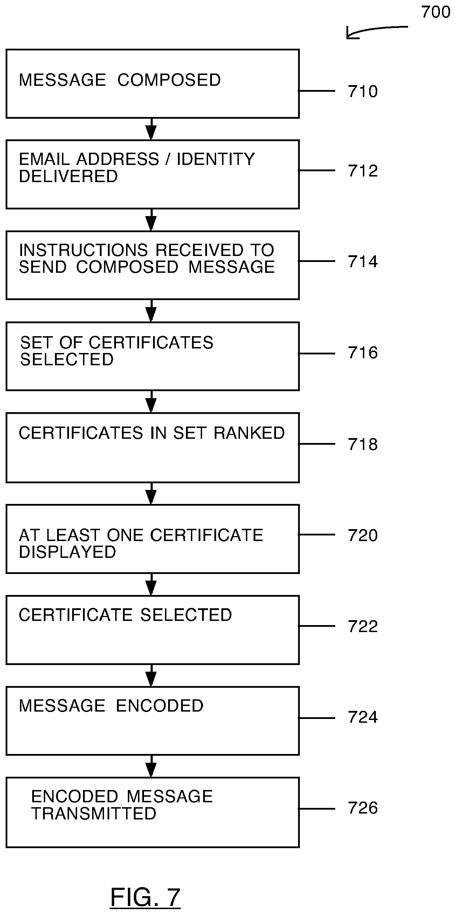

Referring now to FIG. 7, a flowchart illustrating steps in a method of processing messages for transmission from a computing device in accordance with at least one embodiment is shown generally as 700. Additional details of some of the features described below in respect of the steps of method 700 may be described earlier in the present specification.

The steps of method 700 are performed at the computing device. In one embodiment, at least some of the steps of the method are performed by a messaging application 140 that executes and resides on a mobile device (e.g. mobile device 100 of FIG. 1). In variant embodiments, the messaging application may be residing and executing on a computing device other than a mobile device. Furthermore, the messaging application need not be a stand-alone application, and the functionality of the messaging application may be implemented in one or more applications executing and residing on the mobile or other computing device.

Method 700 commences at 710 with composing a message such as an email message using a messaging application at the computing device, where at least some data of the message to be sent is to be subject to a security encoding that triggers the performance of the remaining steps of method 700. Part of the message composing may involve indicating which portions of the message are to be encoded. In one example embodiment, the messaging application may be configured to perform the remaining steps of method 700 whenever at least some of the data of the message to be sent is to be signed (e.g. using a private key of the user stored on the computing device) and/or encrypted. After composition of the message is complete, the messaging application receives a command to send the message to one or more recipients. For example, after composition of the message, the computing device may receive an indication of actuation of a user interface such as, for example, pressing of a "send" button, selection of a "send" item from a menu, touching of a "send" object, or speaking of a voice command, etc.

At Block 712, which may also precede or comprise part of the message generation Block 710, a sending email address is determined. If the user only has a single email address/identity, then this step may be performed automatically by the messaging application. However, if the user has multiple email addresses/identities, the user select an email address/identity to use for the message. In some embodiments, a default or primary email address/identity may be initially set by the messaging application, and a different, secondary email address/identity may optionally be selected. For example, a user may have a work email address/identity, as well as a personal email address identity for personal communications. Referring briefly to the example data illustrated in FIG. 5, it can be seen that the user "Michael Brown" has two different email accounts or addresses/identities 510 which appear in the certificates 502: "mikeb@rim.com" (eg. in "C1" 502A) and "michaelb@sekurity.kom".

At Block 714, the instruction to send the composed message at 710 is received by the messaging application. Further steps of method 700 may be initiated automatically by the messaging application. For example, if the user has selected a certificate 502 to be used in encoding the message, then the message, or a portion thereof, can be encoded and transmitted in accordance with Blocks 724 and 726 discussed below. It should be understood that while the certificate ranking steps discussed below are described as occurring subsequent to the instruction to send the composed message at 710, such ranking may occur earlier in and concurrently with the process of composing the message.

At Block 716, a set of one or more certificates 502, including at least one personal certificate where the user is the subject of the personal certificate, is located and determined from the memory 108 of the computing device 100 (or from remote storage). By way of example only, the messaging application may be programmed to only select personal certificates - in such an embodiment, a set determined from the certificate store data 500 may include the personal certificates "C1" to "C4". The determined set of certificates 502 may be stored temporarily in a volatile memory and/or retrieved from a persistent store on the computing device.

At Block 718, the certificates in the set may be ranked in accordance with at least one predetermined ranking criterion. One criterion which may be used for ranking the certificates 502 may involve, for each certificate in the set, determining if the certificate comprises an email address corresponding to the sending email address. Another criterion which may be used for ranking the certificates 502 may involve determining the issue date 516 for each certificate 502 in the set and ranking by issue date 516, e.g., ranking by most recent issue date 516 to least recent issue date 516. A further criterion which may be used to rank the certificates 502 may involve determining the expiry date 518 for each certificate 502 in the set and ranking by expiry date, e.g., ranking by latest expiry date 518 to earliest expiry date 518. Yet another criterion which the messaging application may use is determining, for each certificate 502 in the set, if the certificate 502 is trusted. The at least one criterion may comprise one or a combination of the above-noted criteria for ranking the certificates 502. Other criteria, such as ranking based on the certificate's public key algorithm 520, e.g., based on the strength of the public key algorithm, may be used in alternate embodiments. Furthermore, certificates may also be ranked in accordance with the intended use for a particular message, and the conformity of each certificate's usage data 514 or availability for such intended use.

By way of example only, referring to the certificate store data 500, consider a situation in which in Block 712 a sending email address/identity from which to send a message has been determined or selected (in this example, the email account mikeb@rim.com has been selected), and in Block 710 the email message is designated to be "signed".

In Block 716, the messaging application may first determine a set of certificates 502. In one example embodiment, the messaging application may be programmed to determine that the set includes all available certificates 502 in the certificate store data 500. The messaging application may, in Block 718, be programmed to positively rank those certificates which may be used for "signing", i.e. certificates 502 having private key data 506 and which may be used for "signing". In this example, positive ranking certificates 502 include certificates "C1" 502A to "C4" 502D, which all have private key data 506. However, only certificates "C1" 502A, "C2" 502B and "C4" 502D have usage data 514 corresponding to being available for signing use, and may be positively ranked accordingly.

The messaging application may be programmed to positively rank certificates 502 based on whether their email address data 510 corresponds to the sending email address mikeb@rim.com. In this example, the certificates which would receive a positive ranking based on such a ranking criteria would include "C1" 502A, "C2" 502B and "C3" 502C which both have email address data 510 matching the sending email address.

The messaging application may further be programmed to positively rank certificates 502 based on whether they can be authenticated or trusted - with such a ranking criteria, certificates "C2" 502B, "C3" 502C, "C4" 502D, "C6" 502F, "C7" 502G and "C8" 502H would all be positively ranked. The messaging application may be further programmed to rank based on expiry date. In the example data 500, only certificate "C4" 502D has expired, and the remaining certificates 502 correspondingly receive a positive ranking. Depending on the ranking scale, in an alternate embodiment, certificates "C5" 502E to "C8" 502H might receive a higher positive ranking for having the furthest-away expiry date.

In the example embodiment, applying a cumulative scoring to the various ranking criteria, "C2" 502B may be the highest ranked as it received a positive ranking for each of the applied criteria.

Consider another example scenario in which the account/email address michaelb@sekurity.kom is determined or selected as the account/email address from which to send a "signed" email message. As noted in the example scenario above, the determined set of certificates 502 may include all available certificates 502. The messaging application may, in Block 718, be programmed to positively rank those certificates which may be used for "signing", i.e. certificates 502 having private key data 506 and which may be used for "signing". In this example, positive ranking certificates 502 include certificates "C1" 502A to "C4" 502D, which all have private key data 506. However, only certificates "C1" 502A, "C2" 502B and "C4" 502D have usage data 514 corresponding to being available for signing use, and may be positively ranked accordingly.

The messaging application may further be programmed to positively rank certificates 502 based on whether they can be authenticated or trusted. With such a ranking criteria, certificates "C2" 502B, "C3" 502C, "C4" 502D, "C6" 502F, "C7" 502G and "C8" would all be positively ranked. The messaging application may be further programmed to rank based on expiry date. In the example data 500, only certificate "C4" 502D has expired, and the remaining certificates 502 correspondingly receive a positive ranking. Depending on the ranking scale, in an alternate embodiment, certificates "C5" 502E to "C8" 502H might receive a higher positive ranking for having the furthest-away expiry date.

The messaging application may be programmed to positively rank certificates 502 based on whether their email address data 510 corresponds to the sending email address michaelb@sekurity.kom. In this example, the certificate 502 which would receive a positive ranking based on such a ranking criteria would include "C4" 502D which has email address data 510 matching the sending email address

In the present example, applying a cumulative scoring to the various ranking criteria, determining the highest ranking certificate may depend on the weighting of each ranking criteria applied since no certificate 502 positively ranks for all of the criteria. If more weight is given to the sending email address criteria, then "C4" 502D may be determined to be the highest ranking. Similarly, if the messaging application is programmed to place the highest weighting to the trusted/authenticated criteria, then "C4" 502D may be determined to be the highest ranking. Conversely, if the expiry date 518 criteria is to be given the highest weighting, then "C1" 502A and/or "C2" 502B may be given the highest ranking. Other weighting schemes may be employed which favour various combinations of criteria over others.

Once the certificates in the set are ranked, at least one of the ranked certificates may be displayed on the computing device (Block 720). If only one certificate is displayed, it will typically be the certificate 502 which the messaging application determines to be the most likely to satisfy the specified requirements (which will be referred to herein as the "highest ranking").

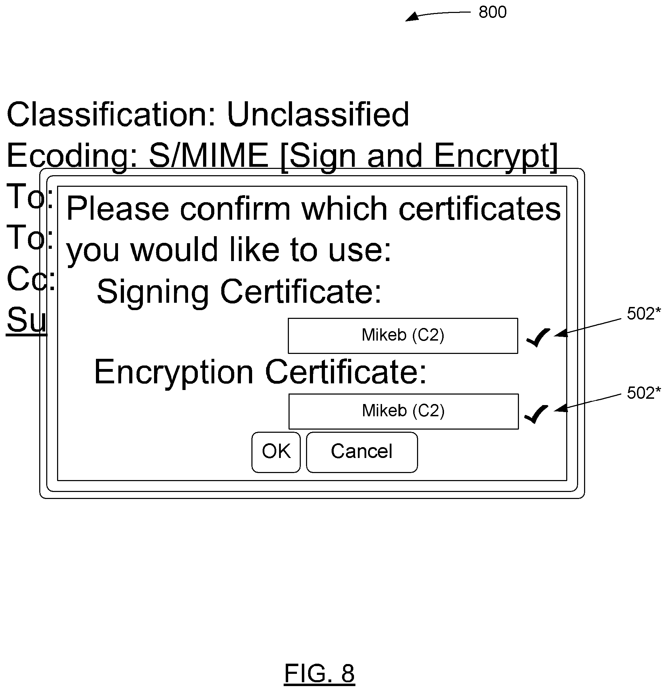

Referring now to FIG. 8, illustrated therein is an exemplary user interface 800, displaying an identifier corresponding to the highest-ranking certificate 502*, as determined in step 716, which has been identified as such for both signing and encryption purposes in encoding a message. In various embodiments, "user friendly" identifiers for each certificate 502 may be created and stored, to more easily identify and reference each certificate 502. The user interface 800 in the present example comprises a graphical user interface (GUI) which is displayed on the display of a computing device (e.g. display 110 of mobile device 100 of FIG. 1). GUI 800 is presented by the messaging application to a user composing a message 612 that is to be encoded. As will be understood, different certificates 502 may be used for different purposes such as signing and encryption. In an alternate embodiment, more than one certificate 502 may be displayed, typically in order of highest ranking, to facilitate a user's selection of an appropriate certificate 502.

Referring again to FIG. 7, the certificate 502 to be used is then selected (Block 722). If only one certificate is displayed in Block 720, then the user may either confirm the selection of the highest ranking certificate 502*, or reject it and manually review the available certificates 502 and select a different one. Similarly, if a ranked list of certificates 502 is displayed, the user can select a certificate 502 from the list. An input device (e.g. a clickwheel, trackball, mouse, keyboard, touch screen, microphone, etc.) of the computing device may be employed to make the desired selection.

In an alternative embodiment, the messaging application may be programmed to automatically select the highest ranked certificate 502*, and display information on the display corresponding to the selection of such certificate 502. The user can then be provided with the opportunity to view the certificate 502 data before accepting the selection of the certificate 502. In yet a further alternative embodiment, the messaging application may be programmed to automatically select the highest ranked certificate 502* without displaying information on the display corresponding to the selection of such certificate 502.

The message or a portion thereof may then be encrypted and/or signed using the selected certificate 502 (Block 724) and transmitted by the computing device (Block 726).

It will be understood by persons skilled in the art that the features of the example user interface illustrated in FIG. 8 are described with reference to an example implementation, and that variations are possible in different implementations of embodiments of the system and method described herein.

Once a certificate 502 has been selected, the messaging application may be programmed to save the certificate 502 data in the memory 108 as default certificate data. Such default certificate data may be presented as a default certificate selection for future messages which are to be secured.

The steps of a method of processing messages in accordance with any of the embodiments described herein may be provided as executable software instructions stored on computer-readable media, which may include transmission-type media.

As used herein, the wording "and/or" is intended to represent an inclusive-or. That is, "X and/or Y" is intended to mean X or Y or both. Moreover, "X, Y, and/or Z" is intended to mean X or Y or Z or any combination thereof.

The invention has been described with regard to a number of embodiments. However, it will be understood by persons skilled in the art that other variants and modifications may be made without departing from the scope of the invention as defined in the claims appended hereto.

## Claims

1. A method of selecting a certificate (502) for use with a message to be transmitted from a computing device (100), the message having been composed at the computing device, the method being performed at the computing device, the method comprising:
determining, by a messaging application, a set of certificates (502);
ranking, by the messaging application, each certificate (502) in the set based on one or more predetermined ranking criteria;
displaying, by the messaging application on a display of the computing device a plurality of ranked certificates (502) in a ranked order, wherein at least one certificate (502) comprises a highest ranked certificate (502); and
selecting, by the messaging application a displayed certificate (502) in response to a user input received at an input device of the computing device for use with the message to be transmitted;
securing, by the messaging application a message using the selected certificate; and transmitting the secured message.

2. The method of selecting a certificate (502) in accordance with claim 1, wherein the one or more predetermined ranking criteria is selected from:
an email address (510) associated with each certificate (502);
an issue date (516) for each certificate (502);
an expiry date (518) for each certificate (502);
a public key algorithm (520) and public key length associated with each certificate (502);
trusted status data (524) associated with each certificate; and
an allowed usage (514) for each certificate (502).

3. The method of selecting a certificate (502) in accordance with claim 1 or 2, wherein the certificates (502) in the set are ranked using a cumulative scoring of a plurality of predetermined ranking criteria or based on a weighting of a plurality of predetermined ranking criteria.

4. The method of selecting a certificate (502) in accordance with any one of the preceding claims, wherein the certificates (502) in the set are ranked based on whether or not each certificate (502) includes an e-mail address corresponding to a sending email address.

5. The method of selecting a certificate (502) in accordance with any one of the preceding claims, wherein the determining step and ranking step occur subsequent to receiving an instruction to transmit a message securely or the determining step and ranking step occur concurrently with the composition of the message.

6. The method of selecting a certificate (502) in accordance with any one of the preceding claims, further comprising storing default certificate data corresponding to the selected certificate (502).

7. The method of selecting a certificate (502) in accordance with any one of the preceding claims, wherein the selected certificate is for use in transmitting a secure email message.

8. The method of selecting a certificate (502) in accordance with any one of the preceding claims, wherein displaying a plurality of ranked certificates (502) comprises displaying user friendly identifiers for each certificate (502).

9. The method of selecting a certificate (502) in accordance with any one of the preceding claims, wherein in response to selecting a displayed certificate (502), the selected certificate is stored as a default certificate.

10. A computer-readable medium comprising instructions executable on a processor of the computing device for causing the computing device to implement the steps of the method of any one of claims 1 to 9.

11. A computing device (100) comprising a computer-readable medium comprising instructions executable on a processor of the computing device for causing the computing device to implement the steps of the method of any one of claims 1 to 9

## Patentansprüche

1. Verfahren zum Auswählen eines Zertifikats (502) zur Verwendung mit einer von einer Computervorrichtung (100) zu übertragenden Mitteilung, welche Mitteilung in der Computervorrichtung verfasst wurde, welches Verfahren in der Computervorrichtung durchgeführt wird und welches Verfahren enthält:
Ermitteln einer Gruppe von Zertifikaten (502) durch eine Mitteilungsanwendung;
Einordnen jedes Zertifikats (502) in der Gruppe auf der Grundlage von einem oder mehreren vorbestimmten Rangordnungskriterien durch die Mitteilungsanwendung;
Anzeigen einer Mehrzahl von eingeordneten Zertifikaten (502) in einer Rangfolge auf einer Anzeige der Computervorrichtung durch die Mitteilungsanwendung, wobei mindestens ein Zertifikat (502) ein Zertifikat (502) mit höchstem Rang umfasst; und
Auswählen eines angezeigten Zertifikats (502) zur Verwendung mit der zu übertragenden Mitteilung durch die Mitteilungsanwendung ansprechend auf eine Benutzereingabe, die an einer Eingabeeinrichtung der Computervorrichtung empfangen wird;
Sichern einer das ausgewählte Zertifikat verwendenden Mitteilung durch die Mitteilungsanwendung;
und Übertragen der gesicherten Mitteilung.

2. Verfahren zum Auswählen eines Zertifikat (502) gemäß Anspruch 1, wobei das eine oder die mehreren vorbestimmten Rangordnungskriterien ausgewählt sind aus:
einer jedem Zertifikat (502) zugehörigen E-Mail-Adresse (510);
einem Erstellungsdatum (516) für jedes Zertifikat (502);
einem Ablaufdatum (518) für jedes Zertifikat (502);
einem Algorithmus (520) eines öffentlichen Schlüssels und einer Länge eines öffentlichen Schlüssels, der jedem Zertifikat (502) zugehörig ist;
Vertrauenswürdigkeits-Statusdaten (524), die jedem Zertifikat zugehörig sind; und
einer zulässigen Verwendung (514) für jedes Zertifikat (502).

3. Verfahren zum Auswählen eines Zertifikats (502) gemäß Anspruch 1 oder 2, wobei die Zertifikate (502) in der Gruppe unter Verwendung einer kumulativen Bewertung einer Vielzahl von vorbestimmten Rangordnungskriterien oder auf der Grundlage einer Gewichtung einer Vielzahl von vorbestimmten Rangordnungskriterien eingeordnet werden.

4. Verfahren zum Auswählen eines Zertifikats (502) gemäß einem der vorhergehenden Ansprüche, wobei die Zertifikate (502) in der Gruppe auf der Grundlage davon eingeordnet werden, ob jedes Zertifikat (502) eine einer Sende-E-Mail-Adresse entsprechende E-Mail-Adresse enthält.

5. Verfahren zum Auswählen eines Zertifikats (502) gemäß einem der vorhergehenden Ansprüche, wobei der Ermittlungsschritt und der Einordnungsschritt anschließend an den Empfang eines Befehls erfolgen, eine Mitteilung sicher zu übertragen, oder der Ermittlungsschritt und der Einordnungsschritt gleichzeitig mit dem Verfassen der Mitteilung erfolgen.

6. Verfahren zum Auswählen eines Zertifikats (502) gemäß einem der vorhergehenden Ansprüche, ferner enthaltend das Speichern von Standard-Zertifikatsdaten entsprechend dem ausgewählten Zertifikat (502).

7. Verfahren zum Auswählen eines Zertifikats (502) gemäß einem der vorhergehenden Ansprüche, wobei das ausgewählte Zertifikat zur Verwendung beim Übertragen einer sicheren E-Mail-Nachricht vorgesehen ist.

8. Verfahren zum Auswählen eines Zertifikats (502) gemäß einem der vorhergehenden Ansprüche, wobei das Anzeigen einer Vielzahl von eingeordneten Zertifikaten (502) das Anzeigen von benutzerfreundlichen Identifizierungsmerkmalen für jedes Zertifikat (502) umfasst.

9. Verfahren zum Auswählen eines Zertifikats (502) gemäß einem der vorhergehenden Ansprüche, wobei ansprechend auf das Auswählen eines angezeigten Zertifikats (502) das ausgewählte Zertifikat als ein Standard-Zertifikat gespeichert wird.

10. Computerlesbares Medium, das auf einem Prozessor der Computervorrichtung ausführbare Befehle enthält, um die Computervorrichtung zu veranlassen, die Schritte des Verfahrens nach einem der Ansprüche 1 bis 9 umzusetzen.

11. Computervorrichtung (100), die ein computerlesbares Medium enthält, das auf einem Prozessor der Computervorrichtung ausführbare Befehle enthält, um die Computervorrichtung zu veranlassen, die Schritte des Verfahrens nach einem der Ansprüche 1 bis 9 umzusetzen.

## Revendications

1. Procédé de sélection d'un certificat (502) destiné à être utilisé avec un message devant être transmis depuis un dispositif informatique (100), le message ayant été composé au niveau du dispositif informatique, le procédé étant effectué au niveau du dispositif informatique, le procédé comprenant :
la détermination, par une application de messagerie, d'un ensemble de certificats (502) ;
le classement, par l'application de messagerie, de chaque certificat (502) dans l'ensemble sur la base d'un ou plusieurs critères de classement prédéterminés ;
l'affichage, par l'application de messagerie sur un afficheur du dispositif informatique d'une pluralité de certificats classés (502) dans un ordre classé, dans lequel au moins un certificat (502) comprend un certificat classé le plus haut (502) ; et
la sélection, par l'application de messagerie d'un certificat affiché (502) en réponse à une entrée d'utilisateur reçue au niveau d'un dispositif d'entrée du dispositif informatique destiné à être utilisé avec le message devant être transmis ;
la sécurisation, par l'application de messagerie d'un message en utilisant le certificat sélectionné ; et la transmission du message sécurisé.

2. Procédé de sélection d'un certificat (502) selon la revendication 1, dans lequel les un ou plusieurs critères de classement prédéterminés sont sélectionnés parmi :
une adresse de courriel (510) associée à chaque certificat (502) ;
une date d'émission (516) pour chaque certificat (502) ;
une date d'expiration (518) pour chaque certificat (502) ;
un algorithme à clé publique (520) et une longueur de clé publique associés à chaque certificat (502) ;
des données de statut de confiance (524) associées à chaque certificat ; et
une utilisation autorisée (514) pour chaque certificat (502).

3. Procédé de sélection d'un certificat (502) selon la revendication 1 ou 2, dans lequel les certificats (502) dans l'ensemble sont classés en utilisant un scorage cumulatif d'une pluralité de critères de classement prédéterminés ou sur la base d'une pondération d'une pluralité de critères de classement prédéterminés.

4. Procédé de sélection d'un certificat (502) selon l'une quelconque des revendications précédentes, dans lequel les certificats (502) dans l'ensemble sont classés sur la base de si oui ou non chaque certificat (502) comprend une adresse de courriel correspondant à une adresse de courriel d'envoi.

5. Procédé de sélection d'un certificat (502) selon l'une quelconque des revendications précédentes, dans lequel l'étape de détermination et l'étape de classement se produisent à la suite de la réception d'une instruction pour transmettre un message de façon sécurisée ou l'étape de détermination et l'étape de classement se produisent simultanément avec la composition du message.

6. Procédé de sélection d'un certificat (502) selon l'une quelconque des revendications précédentes, comprenant en outre le stockage de données de certificat par défaut correspondant au certificat sélectionné (502).

7. Procédé de sélection d'un certificat (502) selon l'une quelconque des revendications précédentes, dans lequel le certificat sélectionné est destiné à être utilisé dans la transmission d'un message de courriel sécurisé.

8. Procédé de sélection d'un certificat (502) selon l'une quelconque des revendications précédentes, dans lequel l'affichage d'une pluralité de certificats classés (502) comprend l'affichage d'identifiants conviviaux pour chaque certificat (502).

9. Procédé de sélection d'un certificat (502) selon l'une quelconque des revendications précédentes, dans lequel en réponse à la sélection d'un certificat affiché (502), le certificat sélectionné est stocké comme un certificat par défaut.

10. Support lisible par ordinateur comprenant des instructions exécutables sur un processeur du dispositif informatique pour amener le dispositif informatique à mettre en oeuvre les étapes du procédé selon l'une quelconque des revendications 1 à 9.

11. Dispositif informatique (100) comprenant un support lisible par ordinateur comprenant des instructions exécutables sur un processeur du dispositif informatique pour amener le dispositif informatique à mettre en oeuvre les étapes du procédé selon l'une quelconque des revendications 1 à 9.
